# EUROPÄISCHE PATENTSCHRIFT

(11) **EP 2 491 260 B1**
(45) Veröffentlichungstag und Bekanntmachung des Hinweises auf die Patenterteilung: **31.08.2016**
(21) Anmeldenummer: 10779213.7
(22) Anmeldetag: 23.09.2010
(51) Int. Cl.: F16C 17/06

(54) **AXIALLAGER MIT VERSATZAUSGLEICH UND ANTRIEBSSTRANG MIT DIESEM**
AXIAL BEARING WITH OFFSET COMPENSATION AND DRIVETRAIN HAVING SAID AXIAL BEARING
PALIER AXIAL AVEC COMPENSATION DE DÉCALAGE ET CHAÎNE CINÉMATIQUE LE COMPRENANT

(30) Priorität: 19.10.2009 DE 102009049878
(43) Veröffentlichungstag der Anmeldung: 29.08.2012
(60) Teilanmeldung: 16001170.6
(73) Patentinhaber: Schaeffler Technologies AG & Co. KG, 91074 Herzogenaurach (DE)
(72) Erfinder: REIK, Wolfgang, 77815 Bühl (DE); KIMMIG, Karl-Ludwig, 77883 Ottenhöfen (DE); STEIGER, Stefan, 64407 Fränkisch-Crumbach (DE)
(86) Internationale Anmeldenummer: PCT/DE2010/001133
(87) Internationale Veröffentlichungsnummer: WO 2011/047654

(56) Entgegenhaltungen:
- WO-A1-2008/064648
- DE-A1- 19 630 244
- FR-A- 964 466

## Beschreibung

Die Erfindung betrifft ein Axiallager in einem Antriebsstrang mit einem Verbrennungsmotor mit einer Kurbelwelle und einem Getriebe mit zumindest einer Getriebeeingangswelle enthaltend einen ersten, motorseitig angeordneten Lagerring und einen zweiten, getriebeseitig angeordneten Lagerring und zwischen den Lagerringen abwälzende Wälzkörper. Sowie einen Antriebsstrang mit einem entsprechenden Axiallager.

Aus der WO 2008/064648 A1 ist eine Drehmomentübertragungseinrichtung in Form einer Doppelkupplung bekannt, die in einem Antriebsstrang zwischen einer Kurbelwelle eines Verbrennungsmotors und zwei Getriebeeingangswellen eines Doppelkupplungsgetriebes wirksam angeordnet ist. Die Drehmomentübertragungseinrichtung ist auf der Kurbelwelle aufgenommen und stützt sich mittels eines Radiallagers an der äußeren, als Hohlwelle ausgebildeten Getriebeeingangswelle ab. Hierzu ist ein Rillenkugellager vorgesehen, das die beiden Reibungskupplungen der Doppelkupplung gemeinsame Gegendruckplatte verdrehbar abstützt. Zwischen Gegendruckplatte und Radiallager ist ein Axiallager in Form eines Gleitlagers vorgesehen, das einen Versatzausgleich für einen gegebenenfalls zwischen der Kurbelwelle und der Getriebeeingangswelle vorhandenem Radialversatz bildet und die Gegendruckplatte axial in Richtung der Kurbelwelle fest auf der Hohlwelle abstützt. Alternativ ist die Verwendung von versatzausgleichenden Nadellagern als Axiallager bekannt.

Aus der FR964466 ist allgemein ein Lager für eine vertikal angeordnete Turbine bekannt, welches sich vertikal erstreckende Zapfen mit sphärischen Enden aufweist.

Ausgehend vom genannten Stand der Technik ergibt sich die Aufgabe, derartige Axiallager zu verbessern und in entsprechenden Antriebssträngen vorzusehen.

Die Aufgabe wird durch einen Antriebsstrang gemäß Anspruch 1 gelöst.

Es ist einAxiallager mit einem radialen Versatzausgleich enthaltend einen ersten, motorseitig angeordneten Lagerring und einen zweiten, getriebeseitig angeordneten Lagerring sowie zwischen den Lagerringen abwälzende Wälzkörper vorgesehen, wobei in den Lagerringen über den Umfang verteilt angeordnete, jeweils mit einem ersten Abwälzradius versehene Wälzlagerflächen angeordnet sind, auf denen jeweils als Wälzkörper ausgebildete Kippstifte mittels beidseitig an den Stirnseiten vorgesehenen, jeweils zu den ersten Abwälzradien komplementären zweiten Abwälzradien um ihre Längsachse begrenzt verkippbar abwälzen. Im Gegensatz zu einem Nadellager, bei dem die Mantelflächen von über den Umfang verteilten, zur Drehachse der Lagerringe radial ausgerichteten Nadeln gegenüber den Lagerringen abwälzen, wälzen im vorgeschlagenen Axiallager während einer relativen Verdrehung der beiden Lagerringe gegeneinander die Abwälzradien der beiden Stirnflächen der Kippstifte auf den in den Lagerringen eingebrachten Abwälzradien ab. Die Kippstifte sind dabei abgesehen von deren Kippwinkel axial zu der Drehachse der Lagerringe ausgerichtet.

Bei vorhandenem Achsversatz von Kurbelwelle und Getriebeeingangswelle erfolgt eine Auslenkung der Kippstifte aus ihrer bei nicht vorhandenem Achsversatz parallel zur Drehachse der Lagerringe parallelen Anordnung um einen vorgegebenen Kippwinkel. Bei einem dadurch hervorgerufenen radialen Versatz der Lagerringe zueinander bewegen sich die Kippstifte bei einer Verdrehung der Lagerringe mit gleicher Drehzahl auf einem Kegelmantel in kreiselnder Bewegung. Zur Begrenzung des Kippwinkels sind die Kippstifte in einen der Lagerringe mit Radialspiel eingesenkt, wobei die Einsenkungen den Kippwinkel begrenzen können. Dabei hat sich als vorteilhaft gezeigt, wenn die Kippstifte radial elastisch gegen den Lagerring vorgespannt sind. Hierzu kann zwischen Einsenkungen des Radiallagers und den Kippstiften axial zwischen den beiden stirnseitigen Abwälzradien der Kippstifte zumindest ein Elastomer-ring vorgesehen sein. Es hat sich als vorteilhaft gezeigt, wenn jeweils im Bereich einer Stirnseite der Kippstifte zwei axial beabstandete Elastomerringe wie O-Ringe zwischen den Einsenkungen und den Kippstiften vorgesehen sind.

Der die Einsenkungen tragende Lagerring kann einteilig oder in vorteilhafter Weise mehrteilig, insbesondere zweiteilig ausgeführt sein, wobei ein bevorzugt gehärtetes Abwälzteil die ersten Abwälzradien aufweist und ein mit diesem verbundenes, beispielsweise verschraubtes, verschweißtes, verpresstes und/oder verrastetes Führungsteil mit einer radial spielbehafteten Führung der Kippstifte gebildet ist.

Die Abwälzradien zwischen Kippstiften und Lagerringen sind konkav und komplementär konvex ausgebildet, vorzugsweise gehärtet. Dabei können die die Abwälzflächen mit den Abwälzradien tragenden Abwälzbereiche der Kippstifte und/oder der Lagerringe partiell gehärtet sein. Alternativ können die Kippstifte und/oder Lagerringe vollständig gehärtet sein. Dabei können die konvexen Kuppen der ersten und zweiten Abwälzradien an den Kippstiften, an den Lagerringen oder gemischt vorgesehen sein. Insbesondere aus fertigungstechnischen Gründen hat es sich jedoch als vorteilhaft erwiesen, die zweiten Abwälzradien in Form von Kuppen an den Kippstiften vorzusehen, beispielsweise spanend aufzubringen und die ersten Abwälzradien in Form von komplementären konvexen Einsenkungen in die Lagerringe einzubringen, beispielsweise bei einer Herstellung der Lagerringe aus Blech einzuprägen.

Die Abwälzradien können dem Radius der Stifte entsprechen, es hat sich jedoch als vorteilhaft erwiesen, wenn die Abwälzradien größer als die Radien der Kippstifte sind. Hierdurch wird insbesondere eine geringere Flächenpressung erzielt.

Das Axiallager kann in vorteilhafter Weise mit einem benachbarten Radiallager kombiniert werden. Beispielsweise können das Axiallager und das Radiallager eine Baueinheit bilden. Diese Baueinheit kann beispielsweise auf einer Getriebeeingangswelle wie Hohlwelle aufgepresst und axial fixiert sein, wobei zu lagernde Bauteile wie beispielsweise eine Drehmomentübertragungseinrichtung beziehungsweise eine beispielsweise in dieser enthaltene Gegendruckplatte einer Reibungskupplung nach dem Aufpressen mit dem Axiallager axial fest verbunden werden. Alternativ kann das zu lagernde Bauteil die Baueinheit enthalten und als solche auf die Getriebeeingangswelle aufgepresst werden. Als besonders vorteilhaft hat sich erwiesen, wenn ein Lagerring des Axiallagers, vorzugsweise der Innenring und ein Lagerring des Radiallagers, vorzugsweise der Außenring einteilig ausgebildet sind.

Die Aufgabe wird entsprechend durch einen Antriebsstrang mit einer Brennkraftmaschine mit einer Kurbelwelle und einem Getriebe mit zumindest einer Getriebeeingangswelle sowie einer auf der Kurbelwelle aufgenommenen und mittels eines Radiallagers verdrehbar an der zumindest einen Getriebeeingangswelle abgestützten Drehmomentübertragungseinrichtung gelöst, wobei das zuvor beschriebene Axiallager zwischen einem Außenring des Radiallagers und dem der Drehmomentübertragungseinrichtung angeordnet ist. Dabei kann die Drehmomentübertragungseinrichtung zumindest eine Reibungskupplung mit einer an der Kurbelwelle aufgenommenen Gegendruckplatte enthalten und das Axiallager zwischen Gegendruckplatte und Radiallager angeordnet sein.

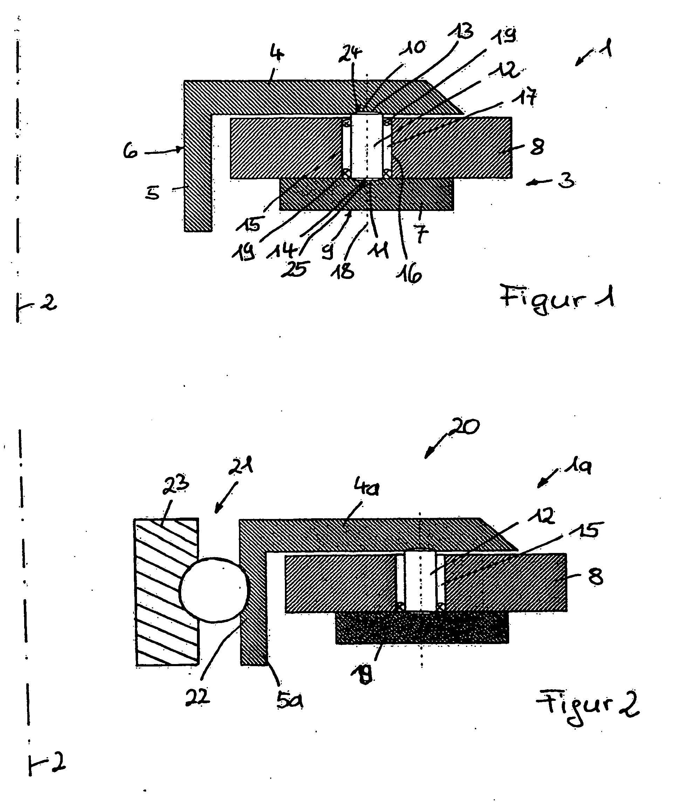

Die Erfindung wird anhand der in den Figuren 1 und 2 dargestellten Ausführungsbeispiele näher erläutert. Dabei zeigen:
- Figur 1: einen Teilschnitt durch ein erfindungsgemäßes Axiallager
- und Figur 2: einen Teilschnitt durch eine Baueinheit aus dem in Figur 1 dargestellten Axiallager und einem Radiallager.

Die Figur 1 zeigt das um die Drehachse 2 angeordnete Axiallager 1 in einem schematischen Teilschnitt. Das Axiallager 1 ist aus einem ersten, motorseitigen, beispielsweise an einem drehfest mit der Kurbelwelle eines Verbrennungsmotors verbundenen Bauteil einer Drehmomentübertragungseinrichtung befestigten Lagerring 3 und einem getriebeseitig, beispielsweise mit einem Außenring eines mit der Getriebeeingangswelle eines Getriebes wie Doppelkupplungsgetriebe verbundenen Radiallagers verbundenen Lagerring 4 gebildet. Zum Aufbau von Drehmomentübertragungseinrichtungen mit einem Axiallager zum Versatzausgleich von Radialversatz zwischen der Kurbelwelle und Getriebeeingangswelle wird beispielsweise auf die WO 2008/064648 A1 verwiesen. Weitere Ausführungsbeispiele einer Drehmomentübertragungseinrichtung neben der gezeigten Doppelkupplung können einen Drehschwingungsdämpfer wie Zweimassenschwungrad enthalten und/oder als einfache Reibungskupplungen, Nassdoppelkupplungen, hydrodynamische Drehmomentwandler ausgebildet sein oder diese enthalten.

Zur Aufnahme an dem getriebeseitigen Bauteil weist der Lagerring 4 einen axialen Ansatz 5 mit einer Innenumfangsfläche auf. Mittels dieser kann das Axiallager auf das getriebeseitige Bauteil gefügt sein, beispielsweise verschrumpft, verpresst, verzahnt oder in ähnlicher Weise verbunden sein. Alternativ kann der zweite Lagerring 4 mittels einer radialen Überdeckung mit dem getriebeseitigen Bauteil gefügt werden.

Der erste, motorseitige Lagerring 3 ist bevorzugt an dessen Stirnseite 9 mit dem motorseitigen Bauteil aufgenommen. Dabei ist eine Verdrehsicherung gegenüber dem motorseitigen Bauteil lediglich höher als das Schleppmoment eines gegebenenfalls radial innerhalb des Axiallagers 1 vorgesehenen Radiallagers vorzusehen. Weiterhin ist der erste Lagerring 3 axial zumindest in Richtung der Kurbelwelle gesichert. Bevorzugt ist ein Axialanschlag für den Lagerring 3 in dem motorseitigen Bauteil vorgesehen, an den der Lagerring 3 angelegt und anschließend durch einen Sicherungsring in die andere Richtung gesichert wird.

Der erste Lagerring 3 ist zweiteilig aus dem Abwälzteil 7 und dem Führungsteil 8 gebildet, die als Scheibenteile ausgebildet sind und aufeinander gefügt, beispielsweise verschweißt sind.

Das Abwälzteil 7 des ersten Lagerrings 3 und der zweite Lagerring 4 weisen einander axial gegenüberliegende, über den Umfang verteilte in die Oberfläche eingebrachte Wälzlagerflächen 24, 25 mit ersten Abwälzradien 10, 11 auf, an denen die kuppenförmig an den Kippstiften 12 angeformten zweiten Abwälzradien 13, 14 anliegen. Die ersten Abwälzradien 10, 11 sind ebenso untereinander gleich ausgebildet wie die zweiten Abwälzradien 13, 14, wobei die ersten Abwälzradien größer als die zweiten Abwälzradien sein können. Wird beispielsweise ein Durchmesser der Kippstifte von 4 mm vorgesehen, können beispielsweise die ersten Abwälzradien 10, 11 75 mm und die zweiten Abwälzradien 13, 14 50 mm betragen, was einem Verhältnis der Abwälzradien 10, 11; 13, 14 von 1,5 und einem Verhältnis der Durchmesser der Kippstifte 12 zu den ersten Abwälzradien 10, 11 von 0,053 beziehungsweise der Durchmesser der Kippstifte zu den zweiten Abwälzradien von 0,08 entspricht. Die ersten Abwälzradien 10, 11 können beispielsweise am Tiefsten Punkt 1 mm in den Lagerring 4 beziehungsweise das Abwälzteil 7 eingesenkt sein.

Die Kippstifte 12 sind in den Einsenkungen 15 des ersten Lagerrings 3 eingesenkt. In dem gezeigten Ausführungsbeispiel.mit einem zweiteiligen Lagerring 3 sind hierzu in dem Führungstell 8 die Einsenkungen 15 aus entsprechenden Durchbrüchen 16 gebildet, die mit den Wälzlagerflächen 25 des Abwälzteils 7 fluchten. Die Einsenkungen 15 weisen einen gegenüber dem Durchmesser der Kippstifte 12 vergrößerten Durchmesser, beispielsweise einen Durchmesser von 6 mm auf, so dass zwischen den Einsenkungen 15 und den Kippstiften 12 ein Radialspiel 17 gebildet wird. Die Kippstifte 12 sind bezüglich ihrer Längsachse 18 in den Einsenkungen 15 entgegen der Wirkung der axial längs der Längsachse 18 voneinander beabstandeten Elastomerringe 19 elastisch und begrenzt verkippbar.

Bei einem sich infolge eines Achsversatzes zwischen der Kurbelwelle und der Getriebeeingangswelle einstellenden radialen Versatzes der Lagerringe 3, 4 bei auseinander fallender Drehachse 2 stellt sich an den Kippstiften 12 entgegen der Wirkung der Elastomerringe 19 ein Kippwinkel zu der Längsachse 18 ein. Bei einer Drehbewegung der beiden Lagerringe 3, 4 jeweils um ihre infolge des Achsversatzes eingestellten Drehachse erfolgt bei jeder Umdrehung eine präzedierende Bewegung der Kippstifte 12 um die ursprüngliche Längsachse 18 auf einem Kegelmantel. Dabei wälzen die Kippstifte 12 auf den durch die Lagerringe 3, 4 und die Kippstifte 12 gebildeten Wälzlagerflächen 24, 25 ab und gleichen den Achsversatz ohne Gleitreibung aus.

Figur 2 zeigt in Abwandlung zu dem Axiallager 1 der Figur 1 ein mit einem Radiallager 21 zu einer um die Drehachse 2 angeordnete Baueinheit 20 verbundenes Axiallager 1 a im schematischen Teilschnitt. In dem gezeigten Ausführungsbeispiel ist der axiale Ansatz 5a des zweiten Lagerrings 4a und der Außenring 22 des Radiallagers 21 einteilig ausgebildet. In dem gezeigten Ausführungsbeispiel ist das Radiallager 21 als Rillenkugellager ausgebildet, dessen Innenring 23 beispielsweise auf der Getriebeeingangswelle wie Hohlwelle eines Doppelkupplungsgetriebes aufgenommen wie aufgepresst sein kann.

Im Weiteren ist zwischen den Kippstiften 12 und den Einsenkungen 15 des Führungsteils 8 lediglich ein im Bereich der Wälzlagerflächen 25 vorgesehener Elastomerring 19 vorgesehen.

### Bezugszeichenliste

- 1: Axiallager
- 1a: Axiallager
- 2: Drehachse
- 3: Lagerring
- 4: Lagerring
- 4a: Lagerring
- 5: Ansatz
- 5a: Ansatz
- 6: Innenumfangsfläche
- 7: Abwälzteil
- 8: Führungsteil
- 9: Stirnseite
- 10: Abwälzradius
- 11: Abwälzradius
- 12: Kippstift
- 13: Abwälzradius
- 14: Abwälzradius
- 15: Einsenkung
- 16: Durchbruch
- 17: Radialspiel
- 18: Längsachse
- 19: Elastomerring
- 20: Baueinheit
- 21: Radiallager
- 22: Außenring
- 23: Innenring
- 24: Wälzlagerfläche
- 25: Wälzlagerfläche

## Patentansprüche

1. Antriebsstrang mit einer Brennkraftmaschine mit einer Kurbelwelle und einem Getriebe mit zumindest einer Getriebeeingangswelle sowie einer auf der Kurbelwelle aufge-nommenen und mittels eines Radiallagers (21) verdrehbar an der zumindest einen Getriebeeingangswelle abgestützten Drehmomentübertragungseinrichtung, **dadurch gekennzeichnet, dass**
ein Axiallager (1, 1a) mit einem radialen Versatzausgleich, enthaltend einen ersten, motorseitig angeordneten Lagerring (3) und einen zweiten, getriebeseitig angeordneten Lagerring (4, 4a) sowie zwischen den Lagerringen (3, 4, 4a) abwälzende Wälzkörper zwischen einem Außenring des Radiallagers und dem der Drehmomentübertragungseinrichtung angeordnet ist, wobei
in den Lagerringen (3, 4, 4a) über den Umfang verteilt angeordnete, jeweils mit einem ersten Abwälzradius (10, 11) versehene Wälzlagerflächen (24, 25) angeordnet sind, auf denen jeweils als Wälzkörper ausgebildete Kippstifte (12) mittels beidseitig an den Stirnseiten vorgesehenen, jeweils zu den ersten Abwälzradien (10, 11) komplementären zweiten Abwälzradien (13, 14) um ihre Längsachse (18) begrenzt verkippbar abwälzen.

2. Antriebsstrang nach Anspruch 1, **dadurch gekennzeichnet, dass** das Axiallager (1 a) und das Radiallager (21) eine Baueinheit (20) bilden.

3. Antriebsstrang nach Anspruch 2, **dadurch gekennzeichnet, dass** ein Lagerring (4a) des Axiallagers (1a) und ein Außenring (22) des Radiallagers (21) einteilig ausgebildet sind.

## Claims

1. Drive train having an internal combustion engine with a crankshaft and a transmission with at least one transmission input shaft and a torque transmission device which is received on the crankshaft and is supported rotatably on the at least one transmission input shaft by means of a radial bearing (21), **characterized in that**
an axial bearing (1, 1a) with a radial offset compensation means, containing a first bearing ring (3) which is arranged on the engine side and a second bearing ring (4, 4a) which is arranged on the transmission side and rolling bodies which roll between the bearing rings (3, 4, 4a) is arranged between an outer ring of the radial bearing and that of the torque transmission device,
anti-friction bearing surfaces (24, 25) which are arranged distributed over the circumference and are provided in each case with a first rolling radius (10, 11) being arranged in the bearing rings (3, 4, 4a), on which anti-friction surfaces (24, 25) tilt pins (12) which are configured in each case as rolling bodies roll such that they can be tilted to a limited extent about their longitudinal axis (18) by means of second rolling radii (13, 14) which are provided on both sides of the end sides and are complementary in each case with respect to the first rolling radii (10, 11).

2. Drive train according to Claim 1, **characterized in that** the axial bearing (1a) and the radial bearing (21) form one structural unit (20).

3. Drive train according to Claim 2, **characterized in that** a bearing ring (4a) of the axial bearing (1a) and an outer ring (22) of the radial bearing (21) are configured in one piece.

## Revendications

1. Chaîne cinématique comprenant un moteur à combustion interne avec un vilebrequin et une transmission avec au moins un arbre d'entrée de transmission ainsi qu'un dispositif de transfert de couple reçu sur le vilebrequin et supporté de manière rotative au moyen d'un palier radial (21) sur l'au moins un arbre d'entrée de transmission, **caractérisée en ce qu'**un palier axial (1, 1a) avec une compensation de décalage radiale, contenant une première bague de palier (3) disposée du côté du moteur et une deuxième bague de palier (4, 4a) disposée du côté de la transmission ainsi que des corps de roulement roulant entre les bagues de palier (3, 4, 4a) est disposé entre une bague extérieure du palier radial et celle du dispositif de transfert de couple,
des surfaces de palier à roulement (24, 25) réparties sur la périphérie, à chaque fois avec un premier rayon de roulement (10, 11), étant prévues dans les bagues de palier (3, 4, 4a), sur lesquelles surfaces de palier des goupilles de basculantes (12) réalisées sous forme de corps de roulement roulent de manière basculante dans une mesure limitée autour de leur axe longitudinal (18) au moyen de deuxièmes rayons de roulement (13, 14) prévus des deux côtés sur les côtés frontaux, complémentaires à chaque fois aux premiers rayons de roulement (10, 11).

2. Chaîne cinématique selon la revendication 1, **caractérisée en ce que** le palier axial (1a) et le palier radial (21) constituent une unité structurelle (20).

3. Chaîne cinématique selon la revendication 2, **caractérisée en ce qu'**une bague de palier (4a) du palier axial (1a) et une bague extérieure (22) du palier radial (21) sont réalisées d'une seule pièce.
